# EUROPÄISCHE PATENTSCHRIFT

(11) **EP 2 393 656 B1**
(45) Veröffentlichungstag und Bekanntmachung des Hinweises auf die Patenterteilung: **19.06.2013**
(21) Anmeldenummer: 10702422.6
(22) Anmeldetag: 23.01.2010
(51) Int. Cl.: B32B 27/18, B32B 27/20, B32B 27/36

(54) **SCHICHTAUFBAU UND FOLIEN FÜR ID-DOKUMENTE MIT VERBESSERTER LASERGRAVIERBARKEIT**
LAYER STRUCTURE AND FILMS FOR ID DOCUMENTS HAVING IMPROVED PROPERTIES FOR LASER ENGRAVING
STRUCTURE STRATIFIÉE ET FEUILLES POUR DOCUMENTS D'IDENTITÉ OFFRANT DES POSSIBILITÉS DE GRAVURE AU LASER AMÉLIORÉES

(30) Priorität: 04.02.2009 EP 09001477; 19.09.2009 EP 09011959
(43) Veröffentlichungstag der Anmeldung: 14.12.2011
(73) Patentinhaber: Bayer Intellectual Property GmbH, 40789 Monheim (DE)
(72) Erfinder: PUDLEINER, Heinz, 47800 Krefeld (DE); YESILDAG, Mehmet-Cengiz, 51377 Leverkusen (DE); TZIOVARAS, Georgios, 42275 Wuppertal (DE); NICKEL, Joerg, 41539 Dormagen (DE); MEYER, Klaus, 41539 Dormagen (DE)
(74) Vertreter: BIP Patents
(86) Internationale Anmeldenummer: PCT/EP2010/000409
(87) Internationale Veröffentlichungsnummer: WO 2010/089035

(56) Entgegenhaltungen:
- EP-A- 1 056 041
- EP-A- 1 852 269
- EP-A- 1 852 270
- EP-A2- 0 190 997
- EP-A2- 0 232 502
- WO-A1-2009/145059
- JP-A- 2004 268 554
- JP-A- 2007 210 166

## Beschreibung

Die vorliegende Erfindung betrifft einen Schichtaufbau mit verbesserter Lasergravierbarkeit, besondere Ausführungsformen solcher Schichtaufbauten in Form von Coextrusionsfolien sowie Sicherheitsdokumente, bevorzugt Identifikationsdokumente enthaltend solche Schichtaufbauten.

Das Beschreiben von Kunststofffolien mittels Lasergravur ist ein wichtiger Schritt bei der Herstellung von Folienverbunden. Derartige Folienverbunde spielen z.B. eine große Rolle für Sicherheitsdokumente, insbesondere Identifikationsdokumente wie Pässe, Ausweise, ID-Karten oder Kreditkarten. Das schwarz/weiß Personalisieren von Karten mittels Lasergravur, d.h. das Aufbringen von Schriftzügen oder Abbildungen wie schwarz/weiß-Fotos ist allgemein bekannt. Im Allgemeinen zeichnet sich das Personalisieren mittels Lasergravur insbesondere durch seine hohe Fälschungssicherheit aus. Das (Schrift-)Bild entsteht im Inneren der Karte, so dass ein Entfernen des (Schrift-)Bildes und Erstellung eines neuen (Schrift-)Bildes nicht möglich ist. Ein Trennen der Karten in ihre einzelnen Schichten, um an die Laser-Schicht zu gelangen, ist beispielsweise bei Karten, welche vollständig aus Polycarbonat hergestellt werden, nicht möglich.

Bei der Personalisierung von Sicherheitsdokumenten, insbesondere Identifikationsdokumenten besteht mehr und mehr der Bedarf nach verbesserter Schärfe und Auflösung.

In EP 190 997 A2 sind diverse anorganische oder organische Pigmente für die Lasergravur beschriebenen, welche in Mengen von 0,001 bis 10 Gew.% (10 bis 100.000 Gew.-ppm), bevorzugt 0,01 bis 3 Gew.% (100 bis 30.000 Gew.-ppm) eingesetzt werden. In den beispielhaft beschriebenen Ausführungsformen werden die Pigmente in einer Menge von 1,8 Gew.-% (18.000 Gew.-ppm) eingesetzt. Beim Einsatz solch hoher Konzentrationen von lasersensiblen Pigmenten für die Lasergravur besteht das Problem, dass Agglomerate in der laserbeschreibbaren Schicht bei der Laserbeschriftung zu sogenannten "Verbrennern", d.h. dicken, schwarzen Punkten führen und so die Qualität des abzubildenden Schriftzugs oder Bildes erheblich beeinträchtigen. Zudem führen insbesondere bei Einsatz von Schwarz-Pigmenten solche hohen Konzentrationen zu einer deutlichen Graufärbung des Basismaterials, wodurch der Kontrast zum abzubildenden Schriftzug oder Bild und damit auch dessen Schärfe und Auflösung verschlechtert werden.

In EP 232 502 A2 ist der Einsatz von Ruß als Schwarzpigment für die Lasergravur von Identifikationskarten auf PVC-Basis beschrieben. Der Ruß wird in Mengen von 0,1 bis 20 g pro 100 kg PVC-Pulver (1 bis 200 Gew.-ppm), bevorzugt in einer Menge von 0,6 g pro 100 kg PVC-Pulver (6 Gew.-ppm) eingesetzt. Auch hier besteht bei hohen Ruß-Konzentrationen das vorangehende Problem. Bei der bevorzugten geringen Ruß-Konzentrationen ist die Schärfe und Auflösung des abzubildenden Schriftzugs oder Bildes jedoch nicht optimal und daher verbesserungswürdig.

In EP 1 056 041 A2 wird beschrieben, dass die Schärfe und Auflösung der Laserbeschriftung einer mehrschichtigen Ausweiskarte dadurch verbessert werden kann, dass die Schicht enthaltend den lasersensiblen Zusatzstoff möglichst dünn, d.h. dünner als 50 µm ausgeführt werden soll. Auf einen möglichen Einfluss der Konzentration des verwendeten Zusatzstoffes gibt EP 1 056 041 A2 keinerlei Hinweise. Im einzigen Ausführungsbeispiel wird eine Menge von 200 ppm Ruß bezogen auf eine Lackzusammensetzung verwendet, welche nach Trocknung in einer deutlich höheren Konzentration in der getrockneten Schicht resultiert. Die in EP 1 056 041 A2 beschriebene Ausführung bietet wiederum den Nachteil der Agglomeratbildung sowie erhöhter Graufärbung des Basismaterials, wodurch Schärfe und Auflösung des abzubildenden Schriftzugs oder Bildes nicht optimal und daher verbesserungswürdig sind.

In der JP 2007-210166 wird eine dreischichtige laserbeschreibbare Coextrusion-Folie aus Polycarbonat beschrieben, von denen wenigstens eine - nämlich die innere Schicht - zwingend ein lasersensibles Additiv aufweist, welches aber nicht zwingend ein Schwarzpigment sein muss. Die beiden äußeren Schichten können Carbon Black oder Mica aufweisen, müssen daher nicht zwingend ein Schwarzpigment aufweisen. Hinsichtlich der Mengenangaben für möglicherweise aber nicht zwingend in den jeweiligen äußeren Schichten enthaltenes Carbon Black wird ein Bereich von 0,0001 - 5 Gew-% (d.h. 1 - 50000 ppm) angegeben. Für die Menge des in der mittleren Schicht enthaltenen lasersensiblen Additivs, welches aber nicht zwingend ein Schwarzpigment sein muss, wird eine Menge von 0,001 - 3 Gew,-% (d.h. 10 - 30.000 ppm) angegeben. Die Beispiele offenbaren Mengen an Carbon Black von 0,002 Gew.% (d.h. 20 ppm) oder 0.08 Gew.-% (d.h. 800 ppm) für die Außenschichten und 0,002 Gew.-% (d.h. 20 ppm) oder 0,003 Gew.-% (d.h. 30 ppm) für die Innenschicht. Das bevorzugte Vorhandensein von lasersensiblen Additiven in allen drei Schichten bedingt jedoch eine Verschlechterung des Kontrastes und führt damit ebenfalls zu nicht optimaler und verbesserungswürdiger Schärfe und Auflösung des abzubildenden Schriftzugs oder Bildes.

JP 2004 268554 offenbart einen mehrschichtige laminierte Folie, die durch Coextrusion hergestellt wird und mindestens eine Schicht enthält, die Farbe unter Einwirkung von Laserlichtbestrahlung entwickelt. Schwarzpigment findet als möglicher Farbstoff keine Erwähnung.

Es bestand somit weiterhin Bedarf nach der Verbesserung der Schärfe und Auflösung von mittels Lasergravur zur Personalisierung von Sicherheitsdokumenten, insbesondere Identifikationsdokumenten einzubringender Schriftzüge oder Abbildungen ohne dabei den Nachteil eines schlechten Farbeindruckes wegen erhöhter Graufärbung des Basismaterials in Kauf nehmen zu müssen..

Der Erfindung lag daher die Aufgabe zugrunde, einen Schichtaufbau bereitzustellen, der für die personalisierte Laserbeschriftung von Sicherheitsdokumenten, insbesondere Identifikationsdokumenten mittels Lasergravur geeignet ist und in den Schriftzüge oder Abbildungen mittels Lasergravur in gegenüber bekannten Systemen verbesserter Schärfe und Auflösung eingebracht werden können ohne dabei den Nachteil eines schlechten Farbeindruckes wegen erhöhter Graufärbung des Basismaterials in Kauf nehmen zu müssen.

Überraschend wurde gefunden, dass bei Lasergravur eines Schichtaufbaus enthaltend wenigstens eine Schicht mit einer eine Schichtdicke von 5 bis 30 µm enthaltend wenigstens einen thermoplastischen Kunststoff und wenigstens ein lasersensibles Additiv in einer Menge von 40 bis 180 ppm eine solche verbesserte Schärfe und Auflösung erreicht werden kann ohne dass dabei ein schlechterer Farbeindruck wegen erhöhter Graufärbung des Basismaterials entsteht. Als Träger für eine solche Schicht eignet sich hierbei eine weitere Schicht enthaltend wenigstens einen thermoplastischen Kunststoff.

Gegenstand der vorliegenden Erfindung ist daher ein Schichtaufbau enthaltend
- wenigstens eine Schicht enthaltend wenigstens einen thermoplastischen Kunststoff und
- wenigstens eine Schicht enthaltend wenigstens einen thermoplastischen Kunststoff und wenigstens ein Schwarzpigment als lasersensibles Additiv,
dadurch gekennzeichnet, dass die Schicht enthaltend wenigstens einen thermoplastischen Kunststoff frei von lasersensiblen Additiven ist und die Schicht enthaltend wenigstens einen thermoplastischen Kunststoff und wenigstens ein Schwarzpigment als lasersensibles Additiv eine Schichtdicke von 5 bis 30 µm aufweist und das Schwarzpigment als lasersensibles Additiv in einer Menge von 40 bis 180 ppm in dieser Schicht enthalten ist.

Im Rahmen der Erfindung sind unter ppm Gew.-ppm zu verstehen, sofern nichts anderes angegeben wird.

Die erfindungsgemäße Auswahl von Schichtdicke und Menge an lasersensiblem Additiv führt zum einen zu ausreichender Transparenz zum anderen jedoch zu ausreichend Absortionszentren für die Laserenergie und bietet damit die Möglichkeit zur Beschriftung mittels Lasegravur mit verbesserter Qualität, d.h. Schärfe und Auflösung.

Die Beschriftung von Kunststoff-Folien mittels Lasergravur wird in der Fachwelt und auch im Folgenden kurz als Laserbeschriftung bezeichnet. Demnach ist im Folgenden unter dem Begriff "laserbeschriftet" mittels Lasergravur beschriftet zu verstehen. Das Verfahren der Lasergravur ist dem Fachmann bekannt und nicht zu verwechseln mit dem Bedrucken mittels Laserdruckern.

Als lasersensible Additive kommen beispielsweise sogenannte Laser-Markier-Additive in Frage, d.h. solche aus einem Absorber im Wellenlängenbereich des zu verwendenden Lasers, bevorzugt im Wellenlängenbereich von ND:YAG-Lasern (Neodym-dotierte Yttrium-Aluminium-Granat-Laser). Solche Laser-Markier-Additive und deren Verwendung in Formmassen sind beispielsweise in WO-A 2004/50766 und WO-A 2004/50767 beschrieben und werden von der Fa. DSM unter dem Markennamen Micabs^{®} kommerziell angeboten. Weiterhin als lasersensible Additive geeignete Absorber sind Ruß, sowie phosphorhaltige Zinn-Kupfer-Mischoxide wie z.B. in WO-A 2006/042714 beschrieben.

Bevorzugt sind lasersensible Additive für zur Lasergravurbeschriftung von dunkel auf hellem Untergrund. Besonders bevorzugte lasersensible Additive im Rahmen der Erfindung sind Schwarzpigmente. Ein ganz besonders bevorzugtes lasersensibles Additiv ist Ruß.

Bevorzugt ist es, wenn die Korngröße des lasersensiblen Additivs im Bereich von 100 nm bis 10 µm liegt, und besonders vorteilhaft, wenn sie im Bereich von 50 nm bis 2 µm liegt.

Bei dem thermoplastischen Kunststoff sowohl der Schicht(en) enthaltend wenigstens einen thermoplastischen Kunststoff als auch der Schicht(en) enthaltend wenigstens einen thermoplastischen Kunststoff und wenigstens ein lasersensibles Additiv kann es sich bevorzugt um wenigstens einen thermoplastischen Kunststoff ausgewählt aus Polymerisaten von ethylenisch ungesättigten Monomeren und/oder Polykondensaten von bifunktionellen reaktiven Verbindungen und/oder Polyadditionaprodukten von bifunktionellen reaktiven Verbindungen, handeln. Für bestimmte Anwendungen kann es vorteilhaft und demnach bevorzugt sein, einen transparenten thermoplastischen Kunststoff einzusetzen. Der thermoplastische Kunststoff der Schicht(en) enthaltend wenigstens einen thermoplastischen Kunststoff sowie der Schicht(en) enthaltend wenigstens einen thermoplastischen Kunststoff und wenigstens ein lasersensibles Additiv kann gleich oder unterschiedlich sein.

Besonders geeignete thermoplastische Kunststoffe sind Polycarbonate oder Copolycarbonate auf Basis von Diphenolen, Poly- oder Copolyacrylate und Poly- oder Copolymethacrylate wie beispielhaft und vorzugsweise Polymethylmethacrylat (PMMA), Poly- oder Copolymere mit Styrol wie beispielhaft und vorzugsweise Polystyrol (PS) oder Polystyrolacrylnitril (SAN), thermoplastische Polyurethane, sowie Polyolefine, wie beispielhaft und vorzugsweise Polypropylentypen oder Polyolefine auf der Basis von cyclischen Olefinen (z.B. TOPAS^{®}, Hoechst), Poly- oder Copolykondensate der Terephthalsäure, wie beispielhaft und vorzugsweise Poly- oder Copolyethylenterephthalat (PET oder CoPET), glycol-modifiziertes PET (PETG), glycol-modifiziertes Poly - oder Copolycyclohexandimethylenterephthalat (PCTG) oder Poly- oder Copolybutylenterephthalat (PBT oder CoPBT), Poly- oder Copolykondensate der Naphthalindicarbonsäure, wie beispielhaft und vorzugsweise Polyethylenglykolnaphthalat (PEN), Poly- oder Copolykondensat(e) wenigstens einer Cycloalkyldicarbonsäure, wie beispielhaft und vorzugsweise Polycyclohexandimethanolcyclohexandicarbonsäure (PCCD), Polysulfone (PSU) oder Mischungen aus den vorangehend genannten.

Bevorzugte thermoplastische Kunststoffe sind Polycarbonate oder Copolycarbonate oder Blends enthaltend wenigstens ein Polycarbonat oder Copolycarbonat. Besonders bevorzugt sind Blends enthaltend wenigstens ein Polycarbonat oder Copolycarbonat und wenigstens ein Poly- oder Copolykondensat der Terephthalsäure, der Naphthalindicarbonsäure oder einer Cycloalkyldicarbonsäure, bevorzugt der Cyclohexandicarbonsäure Ganz besonders bevorzugt sind Polycarbonate oder Copolycarbonate, insbesondere mit mittleren Molekulargewichten M_{W} von 500 bis 100 000, bevorzugt von 10 000 bis 80 000, besonders bevorzugt von 15 000 bis 40 000 oder deren Blends mit wenigstens einem Poly- oder Copolykondensat der Terephthalsäure mit mittleren Molekulargewichten M_{W} von 10.000 bis 200.000, bevorzugt von 26.000 bis 120.000.

Als Poly- oder Copolykondensate der Terephthalsäure eignen sich in bevorzugten Ausführungsformen der Erfindung Polyalkylenterephthalate. Geeignete Polyalkylenterephthalate sind beispielsweise Reaktionsprodukte aus aromatischen Dicarbonsäuren oder ihren reaktionsfähigen Derivaten (z. B. Dimethylestern oder Anhydriden) und aliphatischen, cylcoaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Karl-Hanser-Verlag, München 1973).

Bevorzugte Polyalkylenterephthalate enthalten mindestens 80 Mol%, vorzugsweise 90 Mol% Terephthalsäurereste, bezogen auf die Dicarbonsäurekomponente, und mindestens 80 Mol-%, vorzugsweise mindestens 90 Mol% Ethylenglykol- und/oder Butandiol-1,4- und/oder 1,4-Cyclohexandimethanol-Reste, bezogen auf die Diolkomponente.

Die bevorzugten Polyalkylenterephthalate können neben Terephthalsäureresten bis zu 20 Mol% Reste anderer aromatischer Dicarbonsäuren mit 8 bis 14 C-Atomen oder aliphatischer Dicarbonsäuren mit 4 bis 12 C-Atomen enthalten, wie beispielsweise Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyalkylenterephthalate können neben Ethylen- bzw. Butandiol-1,4-glykol-Resten bis zu 80 Mol% anderer aliphatischer Diole mit 3 bis 12 C-Atomen oder cycloaliphatischer Diole mit 6 bis 21 C-Atomen enthalten, z. B. Reste von Propandiol-1,3, 2-Ethylpropandiol-1,3, Neopentylglykol, Pentan-diol-1,5, Hexandiol-1,6, Cyclohexan-dimethanol-1,4, 3-Methylpentandiol-2,4, 2-Methylpentandiol-2,4, 2,2,4-Trimethylpentandiol-1,3 und 2-Ethylhexandiol-1,6, 2,2-Diethylpropandiol-1,3, Hexandiol-2,5, 1,4-Di-([beta]-hydroxyethoxy)-benzol, 2,2-Bis-(4-hydroxycyclohexyl)-propan, 2,4-Dihydroxy-1,1,3,3-tetramethyl-cyclobutan, 2,2-Bis-(3-[beta]-hydroxyethoxyphenyl)-propan und 2,2-Bis-(4-hydroxypropoxyphenyl)-propan (vgl. DE-OS 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäuren, wie sie z. B. in der DE-OS 19 00 270 und der US-PS 3 692 744 beschrieben sind, verzweigt werden. Beispiele bevorzugter Verzweigungsmittel sind Trimesinsäure, Trimellitsäure, Trimethylolethan und -propan und Pentaerythrit.

Vorzugsweise wird nicht mehr als 1 Mol-% des Verzweigungsmittels, bezogen auf die Säurekomponente, verwendet.

Besonders bevorzugt sind Polyalkylenterephthalate, die allein aus Terephthalsäure und deren reaktionsfähigen Derivaten (z. B. deren Dialkylestern) und Ethylenglykol und/oder Butandiol-1,4 und/oder 1,4-Cyclohexandimethanol-Reste hergestellt worden sind, und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/butandiol-1,4)-terephthalate.

Die als Komponente vorzugsweise verwendeten Polyalkylenterephthalate besitzen bevorzugt eine intrinsische Viskosität von ca. 0,4 bis 1,5 dl/g, vorzugsweise 0,5 bis 1,3 dl/g, jeweils gemessen in Phenol/o-Dichlorbenzol (1:1 Gew.-Teile) bei 25°C.

In besonders bevorzugten Ausführungsformen der Erfindung handelt es sich bei dem Blend von wenigstens einem Polycarbonat oder Copolycarbonat mit wenigstens einem Poly- oder Copolykondensat der Terephthalsäure um einen Blend aus wenigstens einem Polycarbonat oder Copolycarbonat mit Poly- oder Copolybutylenterephthalat oder glycol-modifiziertem Poly- oder Copolycyclohexandimethylenterephthalat. Bei einem solchen Blend aus Polycarbonat oder Copolycarbonat mit Poly- oder Copolybutylenterephthalat oder glycol-modifiziertem Poly- oder Copolycyclohexandimethylenterephthalat kann es sich bevorzugt um einen solchen mit 1 bis 90 Gew.-% Polycarbonat oder Copolycarbonat und 99 bis 10 Gew.% Poly- oder Copolybutylenterephthalat oder glycol-modifiziertem Poly- oder Copolycyclohexandimethylenterephthalat, vorzugsweise mit 1 bis 90 Gew.-% Polycarbonat und 99 bis 10 Gew.-% Polybutylenterephthalat oder glycol-modifiziertem Polycyclohexandimethylenterephthalat handeln, wobei sich die Anteile zu 100 Gew.-% addieren. Besonders bevorzugt kann es sich bei einem solchen Blend aus Polycarbonat oder Copolycarbonat mit Poly- oder Copolybutylenterephthalat oder glycol-modifiziertes Poly - oder Copolycyclohexandimethylenterephthalat um einen solchen mit 20 bis 85 Gew.-% Polycarbonat oder Copolycarbonat und 80 bis 15 Gew.% Poly- oder Copolybutylenterephthalat oder glycol-modifiziertem Poly- oder Copolycyclohexandimethylenterephthalat, vorzugsweise mit 20 bis 85 Gew.-% Polycarbonat und 80 bis 15 Gew.-% Polybutylenterephthalat oder glycol-modifiziertem Polycyclohexandimethylenterephthalat handeln, wobei sich die Anteile zu 100 Gew.-% addieren. Ganz besonders bevorzugt kann es sich bei einem solchen Blend aus Polycarbonat oder Copolycarbonat mit Poly- oder Copolybutylenterephthalat oder glycol-modifiziertem Poly- oder Copolycyclohexandimethylenterephthalat um einen solchen mit 35 bis 80 Gew.-% Polycarbonat oder Copolycarbonat und 65 bis 20 Gew.-% Poly- oder Copolybutylenterephthalat oder glycol-modifiziertem Poly- oder Copolycyclohexandimethylenterephthalat, vorzugsweise mit 35 bis 80 Gew.-% Polycarbonat und 65 bis 20 Gew.-% Polybutylenterephthalat oder glycol-modifiziertem Polycyclohexandimethylenterephthalat handeln, wobei sich die Anteile zu 100 Gew.-% addieren. In ganz besonders bevorzugten Ausführungsformen kann es sich um Blends aus Polycarbonat und glycol-modifiziertem Polycyclohexandimethylenterephthalat in den vorangehend genannten Zusammensetzungen handeln.

Als Polycarbonate oder Copolycarbonate eignen sich in bevorzugten Ausführungsformen besonders aromatische Polycarbonate oder Copolycarbonate.

Die Polycarbonate oder Copolycarbonate können in bekannter Weise linear oder verzweigt sein.

Die Herstellung dieser Polycarbonate kann in bekannter Weise aus Diphenolen, Kohlensäurederivaten, gegebenenfalls Kettenabbrechern und gegebenenfalls Verzweigern erfolgen. Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P. R. Müller, H. Nouvertne', BAYER AG, "Polycarbonates" in Encyclopedia of Polymer Science and Engineering, Volume 11, Second Edition, 1988, Seiten 648-718 und schließlich auf Dres. U. Grigo, K. Kirchner und P. R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Geeignete Diphenole können beispielsweise Dihydroxyarylverbindungen der allgemeinen Formel (I) sein,

HO-Z-OH (I)

worin Z ein aromatischer Rest mit 6 bis 34 C-Atomen ist, der einen oder mehrere gegebenenfalls substituierte aromatische Kerne und aliphatische oder cycloaliphatische Reste bzw. Alkylaryle oder Heteroatome als Brückenglieder enthalten kann.

Beispiele für geeignete Dihydroxyarylverbindungen sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1, 1'-Bis-(hydroxyphenyl)-diisopropylbenzole, sowie deren kemalkylierte und kernhalogenierte Verbindungen.

Diese und weitere geeignete andere Dihydroxyarylverbindungen sind z.B. in DE-A 3 832 396, FR-A 1 561 518, in H. Schnell, Chemistry and Physics of Polycarbonates, Interscience Publishers, New York 1964, S. 28 ff.; S.102 ff. und in D.G. Legrand, J.T. Bendler, Handbook of Polycarbonate Science and Technology, Marcel Dekker New York 2000, S. 72 ff. beschrieben.

Bevorzugte Dihydroxyarylverbindungen sind beispielsweise Resorcin, 4,4'-Dihydroxydiphenyl, Bis-(4-hydroxyphenyl)-methan, Bis-(3,5-dimethyl-4-hydroxyphenyl)-methan, Bis-(4-hydroxyphenyl)-diphenyl-methan, 1, 1-Bis-(4-hydroxyphenyl)-1-phenyl-ethan, 1,1-Bis-(4-hydroxyphenyl)-1-(1-naphthyl)-ethan, 1,1-Bis-(4-hydroxyphenyl)-1-(2-naphthyl)-ethan, 2,2-Bis-(4-hydroxyphenyl)-propan, 2,2-Bis-(3-methyl-4-hydroxyphenyl)-propan, 2,2-Bis-(3,5-dimethyl-4-hydroxyphenyl)-propan, 2,2-Bis-(4-hydroxyphenyl)-1-phenyl-propan, 2,2-Bis-(4-hydroxyphenyl)-hexafluor-propan, 2,4-Bis-(4-hydroxyphenyl)-2-methyl-butan, 2,4-Bis-(3,5-dimethyl-4-hydroxyphenyl)-2-methylbutan, 1,1-Bis-(4-hydroxyphenyl)-cyclohexan, 1,1-Bis-(3,5-dimethyl-4-hydroxyphenyl)-cylohexan, 1, 1-Bis-(4-hydroxyphenyl)-4-methyl-cylohexan, 1,3-Bis-[2-(4-hydroxyphenyl)-2-propyl]-benzol, 1,1'- Bis-(4-hydroxyphenyl)-3-diisopropyl-benzol, 1,1'-Bis-(4-hydroxyphenyl)-4-diisopropyl-benzol, 1,3-Bis-[2-(3,5-dimethyl-4-hydroxyphenyl)-2-propyl]-benzol, Bis-(4-hydroxyphenyl)-ether, Bis-(4-hydroxyphenyl)-sulfid, Bis-(4-hydroxyphenyl)-sulfon, Bis-(3,5-dimethyl-4-hydroxyphenyl)-sulfon und 2,2',3,3'-Tetrahydro-3,3,3',3'-tetramethyl-1,1'-spirobi-[1H-inden]-5,5'-diol oder
Dihydroxydiphenylcycloalkane der Formel (Ia) 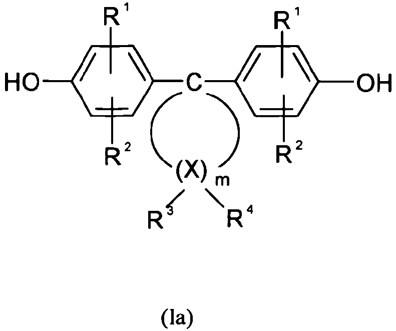 worin
- R¹ und R²: unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl,
- m: eine ganze Zahl von 4 bis 7, bevorzugt 4 oder 5,
- R³ und R⁴: für jedes X individuell wählbar, unabhängig voneinander Wasserstoff oder C₁-C₆-Alkyl und
- X: Kohlenstoff bedeuten,
mit der Maßgabe, dass an mindestens einem Atom X, R³ und R⁴ gleichzeitig Alkyl bedeuten. Bevorzugt sind in der Formel (Ia) an einem oder zwei Atom(en) X, insbesondere nur an einem Atom X R³ und R⁴ gleichzeitig Alkyl.

Bevorzugter Alkylrest für die Reste R³ und R⁴ in Formel (Ia) ist Methyl. Die X-Atome in alpha - Stellung zu dem Diphenylsubstituierten C-Atom (C-1) sind bevorzugt nicht dialkylsubstituiert, dagegen ist die Alkyldisubstitution in beta-Stellung zu C-1 bevorzugt.

Besonders bevorzugte Dihydroxydiphenylcycloalkane der Formenl (Ia) sind solche mit 5 und 6 Ring-C-Atomen X im cycloaliphatischen Rest (m = 4 oder 5 in Formel (Ia)), beispielsweise die Diphenole der Formeln (Ia-1) bis (Ia-3),

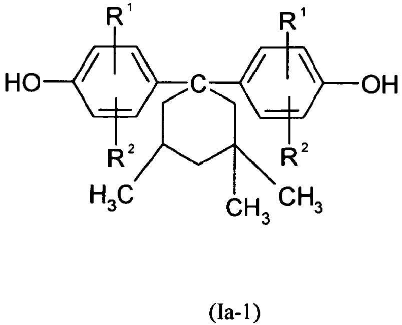

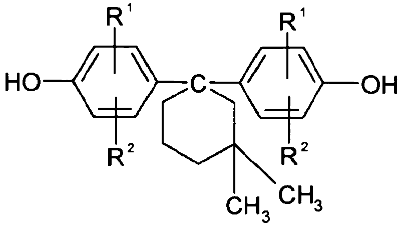

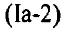

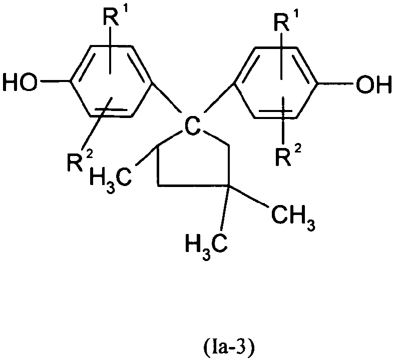

Ein ganz besonders bevorzugtes Dihydroxydiphenylcycloalkane der Formenl (Ia) ist 1,1-Bis-(4-hydroxyphenyl)-3,3,5-trimethyl-cyclohexan (Formel (Ia-1) mit R¹ und R² gleich H).

Solche Polycarbonate können gemäss der EP-A 359 953 aus Dihydroxydiphenylcycloalkanen der Formel (Ia) hergestellt werden.

Besonders bevorzugte Dihydroxyarylverbindungen sind Resorcin, 4,4'-Dihydroxydiphenyl, Bis-(4-hydroxyphenyl)-diphenyl-methan, 1,1-Bis-(4-hydroxyphenyl)-1-phenyl-ethan, Bis-(4-hydroxyphenyl)-1-(1-naphthyl)-ethan, Bis-(4-hydroxyphenyl)-1-(2-naphthyl)-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan, 1,1-Bis-(3,5-dimethyl-4-hydroxyphenyl)-cyclohexan, 1,1-Bis-(4-hydroxyphenyl)-3,3,5-trimethyl-cyclohexan, 1,1'-Bis-(4-hydroxyphenyl)-3-diisopropyl-benzol und 1,1'- Bis-(4-hydroxyphenyl)-4-diisopropyl-benzol.

Ganz besonders bevorzugte Dihydroxyarylverbindungen sind 4,4'-Dihydroxydiphenyl und 2,2-Bis-(4-hydroxyphenyl)-propan.

Es können sowohl eine Dihydroxyarylverbindung unter Bildung von Homopolycarbonaten als auch verschiedene Dihydroxyarylverbindungen unter Bildung von Copolycarbonaten verwendet werden. Es können sowohl eine Dihydroxyarylverbindung der Formel (I) oder (Ia) unter Bildung von Homopolycarbonaten als auch mehrere eine Dihydroxyarylverbindungen der Formel (I) und/oder (Ia) unter Bildung von Copolycarbonaten verwendet werden. Dabei können die verschiedenen Dihydroxyarylverbindungen sowohl statistisch als auch blockweise miteinander verknüpft sein. Im Falle von Copolycarbonaten aus Dihydroxyarylverbindungen der Formel (I) und (Ia), beträgt das molare Verhältnis von Dihydroxyarylverbindungen der Formel (Ia) zu den gegebenenfalls mitzuverwendenden anderen Dihydroxyarylverbindungen der Formel (I) vorzugsweise zwischen 99 Mol% (Ia) zu 1 Mol% (I) und 2 Mol-% (Ia) zu 98 Mol% (I), vorzugsweise zwischen 99 Mol-% (Ia) zu 1 Mol% (I) und 10 Mol% (Ia) zu 90 Mol% (I) und insbesondere zwischen 99 Mol% (Ia) zu 1 Mol-% (I) und 30 Mol% (Ia) zu 70 Mol% (I).

Ein ganz besonders bevorzugtes Copolycarbonat kann unter Verwendung von 1,1-Bis-(4-hydroxyphenyl)-3,3,5-trimethyl-cyclohexan und 2,2-Bis-(4-hydroxyphenyl)-propan Dihydroxyarylverbindungen der Formel (Ia) und (I) hergestellt werden.

Geeignete Kohlensäurederivate können beispielsweise Diarylcarbonate der allgemeinen Formel (II) sein, 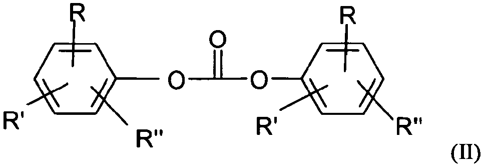 worin
- R, R' und R": unabhängig voneinander gleich oder verschieden für Wasserstoff, lineares oder verzweigtes C₁-C₃₄-Alkyl, C₇-C₃₄-Alkylaryl oder C₆-C₃₄-Aryl stehen, R weiterhin auch -COO-R"' bedeuten kann, wobei R"' für Wasserstoff, lineares oder verzweigtes C₁-C₃₄-Alkyl, C₇-C₃₄-Alkylaryl oder C₆-C₃₄-Aryl steht.

Bevorzugte Diarylcarbonate sind beispielsweise Diphenylcarbonat, Methylphenyl-phenylcarbonate und Di-(methylphenyl)-carbonate, 4-Ethylphenyl-phenyl-carbonat, Di-(4-ethylphenyl)-carbonat, 4-n-Propylphenyl-phenyl-carbonat, Di-(4-n-propylphenyl)-carbonat, 4-iso-Propylphenyl-phenyl-carbonat, Di-(4-iso-propylphenyl)-carbonat, 4-n-Butylphenyl-phenyl-carbonat, Di-(4-n-butylphenyl)-carbonat, 4-iso-Butylphenyl-phenyl-carbonat, Di-(4-iso-butylphenyl)-carbonat, 4-tert-Butylphenyl-phenyl-carbonat, Di-(4-tert-butylphenyl)-carbonat, 4-n-Pentylphenyl-phenyl-carbonat, Di-(4-n-pentylphenyl)-carbonat, 4-n-Hexylphenyl-phenyl-carbonat, Di-(4-n-hexylphenyl)-carbonat, 4-iso-Octylphenyl-phenyl-carbonat, Di-(4-iso-octylphenyl)-carbonat, 4-n-Nonylphenyl-phenyl-carbonat, Di-(4-n-nonylphenyl)-carbonat, 4-Cyclohexylphenyl-phenyl-carbonat, Di-(4-cyclohexylphenyl)-carbonat, 4-(1-Methyl-1-phenylethyl)-phenyl-phenyl-carbonat, Di-[4-(1-methyl-1-phenylethyl)-phenyl]-carbonat, Biphenyl-4-yl-phenyl-carbonat, Di-(biphenyl-4-yl)-carbonat, 4-(1-Naphthyl)-phenyl-phenyl-carbonat, 4-(2-Naphthyl)-phenyl-phenyl-carbonat, Di-[4-(1-naphthyl)-phenyl]-carbonat, Di-[4-(2-naphthyl)phenyl]-carbonat, 4-Phenoxyphenyl-phenyl-carbonat, Di-(4-phenoxyphenyl)-carbonat, 3-Pentadecylphenyl-phenyl-carbonat, Di-(3-pentadecylphenyl)-carbonat, 4-Tritylphenyl-phenyl-carbonat, Di-(4-tritylphenyl)-carbonat, Methylsalicylat-phenyl-carbonat, Di-(methylsalicylat)-carbonat, Ethylsalicylat-phenyl-carbonat, Di-(ethylsalicylat)-carbonat, n-Propylsalicylat-phenyl-carbonat, Di-(n-propylsalicylat)-carbonat, iso-Propylsalicylat-phenyl-carbonat, Di-(iso-propylsalicylat)-carbonat, n-Butylsalicylat-phenyl-carbonat, Di-(n-butylsalicylat)-carbonat, iso-Butylsalicylat-phenyl-carbonat, Di-(iso-butylsalicylat)-carbonat, tert-Butylsalicylat-phenyl-carbonat, Di-(tert-butylsalicylat)-carbonat, Di-(phenylsalicylat)-carbonat und Di-(benzylsalicylat)-carbonat.

Besonders bevorzugte Diarylverbindungen sind Diphenylcarbonat, 4-tert-Butylphenyl-phenyl-carbonat, Di-(4-tert-butylphenyl)-carbonat, Biphenyl-4-yl-phenyl-carbonat, Di-(biphenyl-4-yl)-carbonat, 4-(1-Methyl-1-phenylethyl)-phenyl-phenyl-carbonat, Di-[4-(1-methyl-1-phenylethyl)-phenyl]-carbonat und Di-(methylsalicylat)-carbonat.

Ganz besonders bevorzugt ist Diphenylcarbonat.

Es können sowohl ein Diarylcarbonat als auch verschiedene Diarylcarbonate verwendet werden.

Zur Steuerung bzw. Veränderung der Endgruppen können zusätzlich beispielsweise eine oder mehrere Monohydroxyarylverbindung(en) als Kettenabbrecher eingesetzt werden, die nicht zur Herstellung des oder der verwendeten Diarylcarbonat(e) verwendet wurde(n). Dabei kann es sich um solche der allgemeinen Formel (III) handeln, 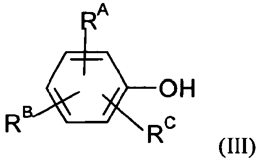 wobei
- R^{A}: für lineares oder verzweigtes C₁-C₃₄-Alkyl, C₇-C₃₄-Alkylaryl, C₆-C₃₄-Aryl oder für -COO-R^{D} steht, wobei R^{D} für Wasserstoff, lineares oder verzweigtes C₁-C₃₄-Alkyl, C₇-C₃₄-Alkylaryl oder C₆-C₃₄-Aryl steht, und
- R^{B}, R^{C}: unabhängig voneinander gleich oder verschieden für Wasserstoff, lineares oder verzweigtes C₁-C₃₄-Alkyl, C₇-C₃₄-Alkylaryl oder C₆-C₃₄-Aryl stehen.

Solche Monohydroxyarylverbindungen sind beispielsweise 1-, 2- oder 3-Methylphenol, 2,4-Dimethylphenol 4-Ethylphenol, 4-n-Propylphenol, 4-iso-Propylphenol, 4-n-Butylphenol, 4-isoButylphenol, 4-tert-Butylphenol, 4-n-Pentylphenol, 4-n-Hexylphenol, 4-iso-Octylphenol, 4-n-Nonylphenol, 3-Pentadecylphenol, 4-Cyclohexylphenol, 4-(1-Methyl-1-phenylethyl)-phenol, 4-Phenylphenol, 4-Phenoxyphenol, 4-(1-Naphthyl)-phenol, 4-(2-Naphthyl)-phenol, 4-Tritylphenol, Methylsalicylat, Ethylsalicylat, n-Propylsalicylat, iso-Propylsalicylat, n-Butylsalicylat, iso-Butylsalicylat, tert-Butylsalicylat, Phenylsalicylat und Benzylsalicylat.

Bevorzugt sind 4-tert-Butylphenol, 4-iso-Octylphenol und 3-Pentadecylphenol.

Geeignete Verzweiger können Verbindungen mit drei und mehr funktionellen Gruppen, vorzugsweise solche mit drei oder mehr Hydroxylgruppen.

Geeignete Verbindungen mit drei oder mehr phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-(4,4-bis-(4-hydroxyphenyl)-cyclohexyl]-propan, 2,4-Bis-(4-hydroxyphenyl-isopropyl)-phenol und Tetra-(4-hydroxyphenyl)-methan.

Sonstige geeignete Verbindungen mit drei und mehr funktionellen Gruppen sind beispielsweise 2,4-Dihydroxybenzoesäure, Trimesinsäure(trichlorid), Cyanursäuretrichlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1 -Tri-(4-hydroxyphenyl)-ethan.

Wenigstens eine Schicht enthaltend wenigstens einen thermoplastischen Kunststoff kann zudem wenigstens einen Füllstoff aufweisen. Bei dem Füllstoff handelt es sich bevorzugt um wenigstens ein Farbpigment und/oder wenigstens einen sonstigen Füllstoff zur Erzeugung einer Transluzenz der gefüllten Schichten, besonders bevorzugt um ein Weißpigment, ganz besonders bevorzugt um Titandioxid, Zirkoniumdioxid oder Bariumsulfat, in einer bevorzugten Ausführungsform um Titandioxid.

Das Füllen einer Schicht enthaltend wenigstens einen thermoplastischen Kunststoff mit wenigstens einem solchen Füllstoff verbessert die Sichtbarkeit der eingebrachten Beschriftung bzw. Abbildung(en), wodurch auch die Wahrnehmung der verbesserten Schärfe und Auflösung weiter erhöht wird.

Die genannten Füllstoffe werden vorzugsweise in Mengen von 2 bis 45 Gew.-%, besonders bevorzugt von 5 bis 30 Gew.-%, bezogen auf das Gesamtgewicht Füllstoff und thermoplastischem Kunststoff, den thermoplastischen Kunststoffen vor der Formgebung zur Kunststoff-Folie, welche zum Beispiel durch Extrusion oder Coextrusion erfolgen kann, zugegeben.

Der erfindungsgemäße Schichtaufbau enthält neben einer ersten wenigstens eine weitere, bevorzugt eine zweite Schicht enthaltend wenigstens einen thermoplastischen Kunststoff und wenigstens ein lasersensibles Additiv, welche eine Schichtdicke von 5 bis 30 µm aufweist und das lasersensible Additiv in einer Menge von 40 bis 180 ppm enthält, wobei die Schicht enthaltend wenigstens einen thermoplastischen Kunststoff und gegebenenfalls wenigstens einen Füllstoff zwischen den beiden Schichten enthaltend wenigstens einen thermoplastischen Kunststoff und wenigstens ein lasersensibles Additiv angeordnet ist.

Die Schicht(en) enthaltend wenigstens einen thermoplastischen Kunststoff und wenigstens ein lasersensibles Additiv weist (weisen) bevorzugt eine Schichtdicke von 8 bis 25 µm auf.

Das lasersensible Additiv ist bevorzugt in einer Menge von 50 bis 160 ppm, besonders bevorzugt in einer Menge von 60 bis 150 ppm, ganz besonders bevorzugt in einer Menge von 60 bis 100 ppm in der oder den Schicht(en) enthaltend wenigstens einen thermoplastischen Kunststoff und wenigstens ein lasersensibles Additiv enthalten.

Die Schicht enthaltend wenigstens einen thermoplastischen Kunststoff und gegebenenfalls wenigstens einen Füllstoff kann bevorzugt eine Schichtdicke von 30 µm bis 375 µm, besonders bevorzugt von 50 µm bis 250 µm und ganz besonders bevorzugt von 75 µm bis 200 µm aufweisen.

Der erfindungsgemäße Schichtaufbau kann beispielsweise und bevorzugt mittels Coextrusion der enthaltenen Schichten, Lamination der enthaltenen Schichten oder Extrusionslamination, d.h. Aufextrudieren der Schicht(en) enthaltend wenigstens einen thermoplastischen Kunststoff und wenigstens ein lasersensibles Additiv auf eine vorgefertigte Schicht enthaltend wenigstens einen thermoplastischen Kunststoff und gegebenenfalls wenigstens einen Füllstoff, hergestellt werden. Bevorzugt sind die Varianten der Coextrusion und des Aufextrudierens. Ganz besonders bevorzugt ist die Herstellung mittels Coextrusion.

Eine solche mittels Coextrusion hergestellte Folie stellte eine besonders bevorzugte Ausführungsform des erfindungsgemäßen Schichtaufbaus und ist ebenfalls Gegenstand der Erfindung.

Gegenstand der vorliegenden Erfindung ist demnach eine Coextrusionsfolie enthaltend
- wenigstens eine Schicht enthaltend wenigstens einen thermoplastischen Kunststoff und
- wenigstens eine Schicht enthaltend wenigstens einen thermoplastischen Kunststoff und wenigstens ein Schwarzpigment als lasersensibles Additiv,
dadurch gekennzeichnet, dass die Schicht enthaltend wenigstens einen thermoplastischen Kunststoff und wenigstens ein Schwarzpigment als lasersensibles Additiv eine Schichtdicke von 5 bis 30 µm aufweist und das lasersensible Additiv in einer Menge von 40 bis 180 ppm in dieser Schicht enthalten ist.

Eine bevorzugte Ausführungsform ist eine mindestens dreischichtige, bevorzugt dreischichtige Coextrusionsfolie, welche zwei Schichten enthaltend wenigstens einen thermoplastischen Kunststoff und wenigstens ein Schwarzpigment als lasersensibles Additiv aufweist, welche eine Schichtdicke von 5 bis 30 µm aufweisen und das lasersensible Additiv in einer Menge von 40 bis 180 ppm enthalten, und wenigstens eine, bevorzugt eine Schicht enthaltend wenigstens einen thermoplastischen Kunststoff aufweist, wobei die Schicht(en) enthaltend wenigstens einen thermoplastischen Kunststoff zwischen den beiden Schichten enthaltend wenigstens einen thermoplastischen Kunststoff und wenigstens ein lasersensibles Additiv angeordnet ist.

In einer ganz besonders bevorzugten Ausführungsform der erfindungsgemäßen Coextrusionsfolie ist das lasersensible Additiv in der Schicht enthaltend wenigstens einen thermoplastischen Kunststoff und wenigstens ein lasersensibles Additiv in einer Menge von 40 bis 100 ppm enthalten.

Eine solche wenigstens dreischichtige, bevorzugt dreischichtige Coextrusionsfolie bietet den Vorteil, dass bei der Einarbeitung in ein Sicherheitdokument nicht darauf geachtet werden muss, dass die mittels Laserbeschriftung beschreibbare Schicht gegenüber der gegebenenfalls mit wenigstens einem Füllstoff gefüllten thermoplastischen Kunststoffschicht nach außen gerichtet ist. Der symmetrische Aufbau der besonders bevorzugten erfindungsgemäßen Coextrusionsfolie ermöglicht eine Laserbeschriftung unabhängig davon, in welche Ausrichtung die Folie in das Sicherheitsdokument eingebracht wurde.

Bevorzugt enthält oder enthalten die Schicht(en) enthaltend wenigstens einen thermoplastischen Kunststoff wenigstens einen der oben genannten Füllstoffe.

Das vorangehend für den erfindungsgemäßen Schichtaufbau genannte, einschließlich der aufgeführten Schichtdicken, Bestandteile und Vorzugsbereiche gilt für die erfindungsgemäße Coextrusionsfolie analog.

Der erfindungsgemäße Schichtaufbau und die erfindungsgemäße Coextrusionsfolie können weitere, vorzugsweise transparente Schichten enthaltend wenigstens einen der oben genannten thermoplastischen Kunststoffe aufweisen.

Der erfindungsgemäße Schichtaufbau und damit auch die erfindungsgemäße Coextrusionsfolie eignet sich hervorragend als Bestandteil für Sicherheitsdokumente, bevorzugt Identifikationsdokumente, welche mittels Lasergravur beschriftet werden sollen.

Der erfindungsgemäße Schichtaufbau eignet sich bevorzugt für die Verbesserung der Schärfe und Qualität von mittels Lasergravur in Sicherheitsdokumente, besonders bevorzugt Identifikationsdokumente einzubringende, vorzugsweise personalisierende Schriftzüge und/oder Abbildungen. Ganz besonders bevorzugt eignet sich der erfindungsgemäße Schichtaufbau für Identifikationsdokumente in Form verklebter oder laminierter Schichtverbunde in Form von Kunststoffkarten, wie z.B. Personalausweisen, Reisepässen, Führerscheinen, Kreditkarten, Bankkarten, Karten für die Zugangskontrolle oder sonstigen Ausweisdokumenten etc.. Bevorzugte Identifikationsdokumente sind im Rahmen der vorliegenden Erfindung mehrschichtige flächenförmige Dokumente mit Sicherheitsmerkmalen wie Chips, Fotografien, biometrischen Daten etc. Diese Sicherheitsmerkmale können von außen sichtbar oder zumindest abfragbar sein. Vorzugsweise hat ein solches Identifikationsdokument eine Größe zwischen der einer Scheckkarte und der eines Reisepasses. Ein solches Identifikationsdokument kann auch Teil eines Dokumentes aus mehreren Teilen sein, wie z.B. ein Identifikationsdokument aus Kunststoff in einem Reisepass, der auch Papier- oder Pappanteile enthält.

Weiterhin Gegenstand der Erfindung ist demnach ein Sicherheitsdokument, bevorzugt Identifikationsdokument enthaltend wenigstens einen erfindungsgemäßen Schichtaufbau.

Das erfindungsgemäße Sicherheitsdokument, bevorzugt Identifikationsdokument kann weitere zusätzliche Schichten aufweisen, über die beispielsweise weitere Informationen in das Sicherheitsdokument, bevorzugt Identifikationsdokument eingebracht werden.

Bei solchen weiteren Informationen kann es sich beispielsweise um personalisierende Porträts oder nicht personalisierende allgemeine Informationen handeln, die beispielsweise in jedem gattungsgleichen Sicherheitsdokument, bevorzugt Identifikationsdokument in gleicher Form enthalten sind.

Solche Schichten können beispielsweise aus vorher mittels herkömmlicher Druckverfahren, vorzugsweise Ink-Jet- oder Laserdruck, besonders bevorzugt Farbdruck mit diesen Informationen bestückten Folien in das Sicherheitsdokument, bevorzugt Identifikationsdokument eingebracht werden.

Mittels Ink-Jet-Druckverfahren bedruckbare Folien sind dem Fachmann bekannt und können beispielsweise solche aus wenigstens einem der oben beschriebenen thermoplastischen Kunststoffe gegebenenfalls enthaltend wenigstens einen der oben beschriebenen Füllstoffe sein. In besonders bevorzugten Ausführungsformen werden zur besseren Sichtbarkeit der aufgedruckten Informationen mittels Füllstoffen wie z.B. Titandioxid, Zirkoniumdioxid, Bariumsulfat etc. weiß oder transluzent eingefärbte Kunststoff-Folien verwendet.

Für mittels Laserdruck, insbesondere mittels Farblaserdruck zu bedruckende Folien eignen sich insbesondere solche Kunststoff-Folien aus einem der oben genannten thermoplastischen Kunststoffe, die einen spezifischen Oberflächenwiderstand von 10⁷ bis 10¹³ Ω, bevorzugt von 10⁸ bis 10¹² Ω aufweisen. Der spezifische Oberflächenwiderstand in Ω wird gemäß DIN IEC 93 bestimmt.

Dabei kann es sich vorzugsweise um solche Folien handeln, bei denen dem thermoplastischen Kunststoff zur Erzielung des spezifischen Oberflächenwiderstandes beispielsweise ein Additiv ausgewählt aus tertiären oder quaternären, bevorzugt quaternären Ammonium- oder Phosphoniumsalzen einer teil- oder perfluorierten organischen Säure oder quaternären Ammonium- oder Phosphoniumhexafluorophosphaten, bevorzugt einer teil- oder perfluorierten Alkylsulfonsäure, vorzugsweise einer Perfluoralkylsulfonsäure zugegeben wurde.

Bevorzugte geeignete quarternäre Ammonium- oder Phosphoniumsalze sind:
- Perfluoroctansulfonsäuretetrapropylammoniumsalz,
- Perfluorbutansulfonsäuretetrapropylammoniumsalz,
- Perfluoroctansulfonsäuretetrabutylammoniumsalz,
- Perfluorbutansulfonsäuretetrabutylammoniumsalz,
- Perfluoroctansulfonsäuretetrapentylammoniumsalz,
- Perfluorbutansulfonsäuretetrapentylammoniumsalz,
- Perfluoroctansulfonsäuretetrahexylammoniumsalz,
- Perfluorbutansulfonsäuretetrahexylammoniumsalz,
- Perfluorbutansulfonsäuretrimethylneopentylammoniumsalz,
- Perfluoroctansulfonsäuretrimethylneopentylammoniumsalz,
- Perfluorbutansulfonsäuredimethyldineopentylammoniumsalz,
- Perfluoroctansulfonsäuredimethyldineopentylammoniumsalz,
- N-Methyl-tripropylammoniumperfluorbutylsulfonat,
- N-Ethyl-tripropylammoniumperfluorbutylsulfonat,
- Tetrapropylammoniumperfluorbutylsulfonat,
- Diisopropyldimethylammoniumperfluorbutylsulfonat,
- Diisopropyldimethylammoniumperfluoroctylsulfonat,
- N-Methyl-tributylammoniumperfluoroctylsulfonat
- Cyclohexyldiethylmethylammoniumperfluoroctylsulfonat,
- Cyclohexyltrimethylammoniumperfluoroctylsulfonat,
sowie die entsprechenden Phosphoniumsalze. Bevorzugt sind die Ammoniumsalze.

Bevorzugt können auch ein oder mehrere der vorstehend genannten quartären Ammonium- oder Phosphoniumsalze, also auch Mischungen eingesetzt werden.

Ganz besonders geeignet ist das Perfluoroctansulfonsäuretetrapropylammoniumsalz, das Perfluoroctansulfonsäuretetrabutylammoniumsalz, das Perfluoroctansulfonsäuretetrapentylammoniumsalz, das Perfluoroctansulfonsäuretetrahexylammoniumsalz und das Perfluoroctansulfonsäuredimethyldiisopropylammoniumsalz sowie die entsprechenden Perfluorbutansulfonsäuresalze.

In einer ganz besonders bevorzugten Ausführungsform kann Perfluorbutansulfonsäuredimethyldiisopropylammoniumsalz (Diisopropyldimethylammonium-perfluorbutylsulfonat) als Additiv verwendet werden.

Die genannten Salze sind bekannt oder können nach bekannten Methoden hergestellt werden. Die Salze der Sulfonsäuren lassen sich beispielsweise durch Zusammengeben äquimolarer Mengen der freien Sulfonsäure mit der Hydroxyform des entsprechenden Kations in Wasser bei Raumtemperatur und Einengen der Lösung darstellen. Andere Herstellungsverfahren sind beschrieben z.B. in DE-A 1 966 931 und NL-A 7 802 830.

Die genannten Salze werden vorzugsweise in Mengen von 0.001 bis 2 Gew.%, bevorzugt von 0.1 bis 1 Gew.% den thermoplastischen Kunststoffen vor der Formgebung zur Kunststoff-Folie, welche zum Beispiel durch Extrusion oder Coextrusion erfolgen kann, zugegeben.

Das erfindungsgemäße Sicherheitsdokument, bevorzugt Identifikationsdokument kann zudem weitere zusätzliche Schichten aufweisen, die dem UV-Schutz, dem Schutz vor mechanischer Beschädigung - wie z.B. Kratzfestbeschichtungen - etc. aufweisen.

Das erfindungsgemäße Sicherheitsdokument, bevorzugt Identifikationsdokument kann beispielsweise derart hergestellt werden, dass aus den verschiedenen Folien für den Aufbau des Sicherheitsdokuments, bevorzugt Identifikationsdokuments ein Folienstapel zusammengelegt und zu einem Schichtverbund laminiert und anschließend in die geeignete Form des Sicherheitsdokumenst, bevorzugt Identifikationsdokuments zugeschnitten wird. Gegebenenfalls können auf dieses Verbundlaminat nachträglich weitere Schichten aufgebracht werden, beispielsweise durch Aufkleben und/oder Auflaminieren weiterer Folien oder Beschichten mittels Lackzusammensetzungen.

Die folgenden Beispiele dienen der exemplarischen Erläuterung der Erfindung und sind nicht als Beschränkung aufzufassen.

### Beispiele

### Herstellung der Masterbatches (Zusammensetzungen) für die Herstellung der erfindungsgemäßen Schichtaufbauten

### Beispiel 1: Compoundierung eines Masterbatches für die Herstellung der Schicht(en) enthaltend ein lasersensibles Additiv

Die Herstellung des Masterbatches für die Herstellung der Schicht enthaltend ein lasersensibles Additiv erfolgte mit einem herkömmlichen Zweischnecken-Compoundierextruder (ZSK 32) bei für Polycarbonat üblichen Verarbeitungstemperaturen von 250 bis 330°C.

Es wurde ein Master-Batch mit folgender Zusammensetzung compoundiert und anschließend granuliert:
● Polycarbonat Makrolon^{®} 3108 der Fa. Bayer MaterialScience AG mit einem Anteil von 99,994 Gew.-%
● Flammruß 101 (Ruß der Fa. Degussa) mit einem mittleren Teilchengröße von 95 nm mit einem Anteil von 0,006 Gew.% (60 ppm).

### Beispiel 2: Compoundierung eines Masterbatches für die Herstellung der Schicht enthaltend einen thermoplastischen Kunststoff und ein Weißpigment als Füllstoff

Die Herstellung Masterbatches für die Herstellung der Schicht enthaltend einen thermoplastischen Kunststoff und ein Weißpigment als Füllstoff erfolgte mit einem herkömmlichen Zweischnecken-Compoundierextruder (ZSK 32) bei für Polycarbonat üblichen Verarbeitungstemperaturen von 250 bis 330°C.

Es wurde ein Master-Batch mit folgender Zusammensetzung compoundiert und anschließend granuliert:
● Polycarbonat Makrolon^{®} 3108 der Fa. Bayer MaterialScience AG mit einem Anteil von 85 Gew.-%
● Titandioxid (Kronos® 2230 der Fa. Kronos Titan) als Weißpigment-Füllstoff mit einem Anteil von 15 Gew.%.

### Herstellung der erfindungsgemäßen Schichtaufbauten in Form von Coextrusionsfolien:

### Beispiele 3 bis 5: Zweischichtige Coextrusionsfolien mit thermoplasdtischer Kunststoff-Schicht enthaltend Weißpigment als Füllstoff und thermoplasdtischer Kunststoff-Schicht enthaltend lasersensibles Additiv

Aus den Masterbatches aus Beispielen 1 und 2 wurden die folgenden zweischichtigen Coextrusionsfolien hergestellt. Dabei wurde die Menge des lasersensiblen Additivs Ruß durch Verdünnen des Masterbatsches aus Beispiel 1 mit Polycarbonat Makrolon^{®} 3108 der Fa. Bayer MaterialScience AG variiert. Die Schicht enthaltend das lasersensible Additiv und den thermoplastischen Kunststoff wurde dabei als lasersensible Schicht bezeichnet; die Schicht enthaltend den thermoplastischen Kunststoff und das Weißpigment als Füllstoff wurde dabei als Substrat-Schicht bezeichnet.

Es wurden 100 µm dicke, laserbeschreibbare, zweischichtige Folien mit folgender Zusammensetzung hergestellt:

| | Lasersensible Schicht Dicke: 15µm | Substrat-Schicht Dicke: 85µm | Ruß-Gehalt in der lasersensiblem Schicht [ppm] |
|---|---|---|---|
| **Beispiel 3 (Vergleichsbeispiel)** | 30 Gew.% Masterbatch aus Beispiel 1 und + 70 Gew.% Makrolon^{®} 3108 | 100 Gew.-% Masterbatch aus Beispiel 2 | 18 |
| **Beispiel 4 (erfindungsgemäß)** | 70 Gew.% Masterbatch aus Beispiel 1 und + 30 Gew.% Makrolon^{®} 3108 | 100 Gew.-% Masterbatch aus Beispiel 2 | 42 |
| **Beispiel 5 (erfindungsgemäß)** | 100 Gew.-%Masterbatch aus Beispiel 1 | 100 Gew.-% Masterbatch aus Beispiel 2 | 60 |

### Beispiele 6 und 7: Zweischichtige Coextrusionsfolien mit thermoplasdtischer Kunststoff-Schicht ohne Füllstoff und thermoplasdtischer Kunststoff-Schicht enthaltend lasersensibles Additiv

Aus dem Masterbatch aus Beispiel 1 und Polycarbonat Makrolon^{®} 3108 der Fa. Bayer MaterialScience AG wurden die folgenden zweischichtigen Coextrusionsfolien hergestellt. Dabei wurde die Menge des lasersensiblen Additivs Ruß durch Verdünnen des Masterbatsches aus Beispiel 1 mit Polycarbonat Makrolon^{®} 3108 der Fa. Bayer MaterialScience AG variiert. Die Schicht enthaltend das lasersensible Additiv und den thermoplastischen Kunststoff wurde dabei als lasersensible Schicht bezeichnet; die Schicht enthaltend den thermoplastischen Kunststoff ohne Füllstoff wurde dabei als Substrat-Schicht bezeichnet.

Es wurden 100 µm dicke, laserbeschreibbare, zweischichtige Folien mit folgender Zusammensetzung hergestellt:

| | Lasersensible Schicht Dicke: 15µm | Substrat-Schicht Dicke: 85µm | Ruß-Gehalt in der lasersensiblenSchicht [ppm] |
|---|---|---|---|
| **Beispiel 6 (Vergleichsbeispiel)** | 30 Gew.% Masterbatch aus Beispiel 1 und + 70 Gew.%Makrolon^{®} 3108 | 100 Gew.-% Makrolon^{®} 3108 | 18 |
| **Beispiel 7 (erfindungsgemäß)** | 70 Gew.% Masterbatch aus Beispiel 1 und + 30 Gew.% Makrolon^{®} 3108 | 100 Gew.% Makrolon^{®} 3108 | 42 |

### Beispiele 8 und 9: Zweischichtige Coextrusionsfolien mit thermoplasdtischer Kunststoff-Schicht ohne Füllstoff und thermoplasdtischer Kunststoff-Schicht enthaltend lasersensibles Additiv

Aus dem Masterbatch aus Beispiel 1 und Polycarbonat Makrolon^{®} 3108 der Fa. Bayer MaterialScience AG wurden die folgenden zweischichtigen Coextrusionsfolien hergestellt. Dabei wurde die Menge des lasersensiblen Additivs Ruß durch Verdünnen des Masterbatsches aus Beispiel 1 mit Polycarbonat Makrolon^{®} 3108 der Fa. Bayer MaterialScience AG variiert. Die Schicht enthaltend das lasersensible Additiv und den thermoplastischen Kunststoff wurde dabei als lasersensible Schicht bezeichnet; die Schicht enthaltend den thermoplastischen Kunststoff ohne Füllstoff wurde dabei als Substrat-Schicht bezeichnet.

Es wurden 200 µm dicke, laserbeschreibbare, zweischichtige Folien mit folgender Zusammensetzung hergestellt:

| | Lasersensible Schicht Dicke: 15µm | Substrat-Schicht Dicke: 185µm | Ruß-Gehalt in der lasersensiblenschicht [ppm] |
|---|---|---|---|
| **Beispiel 8 (Vergleichsbeispiel)** | 30 Gew.% Masterbatch aus Beispiel 1 und + 70 Gew.% Makrolon^{®} 3108 | 100 Gew.% Makrolon^{®} 3108 | 18 |
| **Beispiel 9 (erfindungsgemäß)** | 70 Gew.-% Masterbatch aus Beispiel 1 und + 30 Gew.% Makrolon^{®} 3108 | 100 Gew.% Makrolon^{®} 3108 | 42 |

Es wurde eine Chrom-Walze und eine mattierte Stahl-Walze im Glättwerk eingesetzt und eine laserbeschreibbare Folie in 200 µm Dicke mit sogenannter 1-4 Oberfläche hergestellt.

### Beispiele 10 bis 12: Dreischichtige Coextrusionsfolien mit thermoplasdtischer Kunststoff-Schicht enthaltend Weißpigment als Füllstoff und zwei thermoplasdtischen Kunststoff-Schichten enthaltend lasersensibles Additiv

Aus den Masterbatches aus Beispielen 1 und 2 wurden die folgenden dreischichtigen Coextrusionsfolien hergestellt. Dabei wurde die Menge des lasersensiblen Additivs Ruß durch Verdünnen des Masterbatsches aus Beispiel 1 mit Polycarbonat Makrolon^{®} 3108 der Fa. Bayer MaterialScience AG variiert. Die Schichten enthaltend das lasersensible Additiv und den thermoplastischen Kunststoff wurden dabei als lasersensible Schicht bezeichnet; die Schicht enthaltend den thermoplastischen Kunststoff und das Weißpigment als Füllstoff wurde dabei als Substrat-Schicht bezeichnet.

Es wurden 100 µm dicke, laserbeschreibbare, dreischichtige Folien mit folgender Zusammensetzung hergestellt:

| | Lasersensible Schicht 1 Dicke: 15µm | Substrat-Schicht Dicke: 70µm | Lasersensible Schicht 2 Dicke: 15µm | Ruß-Gehalt in den lasersensiblen Schichten ppm |
|---|---|---|---|---|
| **Beispiel 10 (Vergleichsbeispiel)** | 30 Gew.% Masterbatch aus Beispiel 1 und + 70 Gew.-% Makrolon^{®} 3108 | 100 Gew.-% Masterbatch aus Beispiel 2 | 30 Gew.% Masterbatch aus Beispiel 1 und + 70 Gew.% Makrolon^{®} 3108 | 18 |
| **Beispiel 11 (erfindungsgemä ß)** | 70 Gew.% Masterbatch aus Beispiel 1 und + 30 Gew.-% Makrolon^{®} 3108 | 100 Gew.% Masterbatch aus Beispiel 2 | 70 Gew.% Masterbatch aus Beispiel 1 und + 30 Gew.% Makrolon^{®} 3108 | 42 |
| **Beispiel 12 (erfindungsgemä ß**) | 100 Gew.% Masterbatch aus Beispiel 1 | 100 Gew.-% Masterbatch aus Beispiel 2 | 100 Gew.-% Masterbatch aus Beispiel 1 | 60 |

### Beispiel 13: Compoundierung eines hoch konzentrierten Masterbatches für die Herstellung der Schicht(en) enthaltend ein lasersensibles Additiv

Die Herstellung des Masterbatches für die Herstellung der Schicht enthaltend ein lasersensibles Additiv erfolgte mit einem herkömmlichen Zweischnecken-Compoundierextruder (ZSK 32) bei für Polycarbonat üblichen Verarbeitungstemperaturen von 250 bis 330°C.

Es wurde ein Master-Batch mit folgender Zusammensetzung compoundiert und anschließend granuliert:
- Polycarbonat Makrolon^{®} 3108 der Fa. Bayer MaterialScience AG mit einem Anteil von 99,8 Gew.-%
- Flammruß 101 (Ruß der Fa. Degussa) mit einem mittleren Teilchengröße von 95 nm mit einem Anteil von 0,2 Gew.-% (2000 ppm).

### Beispiele 14 bis 20: Zweischichtige Coextrusionsfolien mit thermoplasdtischer Kunststoff-Schicht enthaltend Weißpigment als Füllstoff und thermoplasdtischer Kunststoff-Schicht enthaltend lasersensibles Additiv

Aus den Masterbatches aus Beispielen 13 und 2 wurden die folgenden zweischichtigen Coextrusionsfolien hergestellt. Dabei wurde die Menge des lasersensiblen Additivs Ruß durch Verdünnen des Masterbatsches aus Beispiel 13 mit Polycarbonat Makrolon^{®} 3108 der Fa. Bayer MaterialScience AG variiert. Die Schicht enthaltend das lasersensible Additiv und den thermoplastischen Kunststoff wurde dabei als lasersensible Schicht bezeichnet; die Schicht enthaltend den thermoplastischen Kunststoff und das Weißpigment als Füllstoff wurde dabei als Substrat-Schicht bezeichnet.

Es wurden 100 µm dicke, laserbeschreibbare, zweischichtige Folien mit folgender Zusammensetzung hergestellt:

| | Lasersensible Schicht Dicke: 15µm | Substrat-Schicht Dicke: 85µm | Ruß-Gehalt in der lasersensiblem Schicht [ppm] |
|---|---|---|---|
| **Beispiel 14 (nicht erfindungsgemäß)** | 0,9 Gew.% Masterbatch aus Beispiel 13 und + 99,1 Gew.-% Makrolon^{®} 3108 | 100 Gew.-% Masterbatch aus Beispiel 2 | 18 |
| **Beispiel 15 (erfindungsgemäß)** | 3 Gew.% Masterbatch aus Beispiel 13 und + 97 Gew.% Makrolon^{®} 3108 | 100 Gew.-% Masterbatch aus Beispiel 2 | 60 |
| **Beispiel 16 (erfindungsgemäß)** | 5 Gew.% Masterbatch aus Beispiel 13 und + 95 Gew.% Makrolon^{®} 3108 | 100 Gew.-% Masterbatch aus Beispiel 2 | 100 |
| **Beispiel 17 (nicht erfindungsgemäß)** | 10 Gew.% Masterbatch aus Beispiel 13 und + 90 Gew.% Makrolon^{®} 3108 | 100 Gew.-% Masterbatch aus Beispiel 2 | 200 |
| **Beispiel 18 (nicht erfindungs-gemäß)** | 15 Gew.-% Masterbatch aus Beispiel 13 und + 85 Gew.% Makrolon^{®} 3108 | 100 Gew.% Masterbatch aus Beispiel 2 | 300 |
| **Beispiel 19 (nicht erfindungs-gemäß)** | 20 Gew.% Masterbatch aus Beispiel 13 und + 80 Ges.-% Makrolon^{®} 3108 | 100 Gew.-% Masterbatch aus Beispiel 2 | 400 |
| **Beispiel 20 (nicht erfindungsgemäß)** | 25 Gew.% Masterbatch aus Beispiel 13 und + 75 Gew.% Makrolon^{®} 3108 | 100 Gew.-% Masterbatch aus Beispiel 2 | 500 |

### Beispiel 21: Herstellung von laserbeschreibbaren Identifikationsdokumenten (ID-Karte)

Für den erfindungsgemäßen ID-Karten-Schichtaufbau eingesetzte Folien:

### Folie 1-1: weiß gefüllte Folie

Es wurde eine Polycarbonatfolie der Dicke 100 µm auf Basis Polycarbonat Makrolon 3108^{®} der Bayer MaterialScience AG und Titandioxid (Kronos® 2230 der Fa. Kronos Titan) als Weißpigment-Füllstoff mit einer Zusammensetzung von 85 Gew.-% Makrolon 3108^{®} und 15 Gew.% Titandioxid bei einer Massetemperatur von ca. 280°C mittels Extrusion hergestellt.

### Folie 1-2: weiß gefüllte Folie

Es wurde eine Folie mit der gleichen Zusammensetzung wie Folie 1-1 der Dicke 400 µm hergestellt.

### Folie 2: transparente Folie

Es wurde eine Polycarbonatfolie der Dicke 50 µm auf Basis Polycarbonat Makrolon 3108^{®} der Bayer MaterialScience AG bei einer Massetemperatur von ca. 280°C mittels Extrusion hergestellt.

Aus den oben aufgeführten Folien wurden wie im Folgenden aufgeführt laserbeschreibbare Schichtaufbauten in Form von ID-Karten laminiert:
Schicht (1) Folie 2; 50 µm
Schicht (2) Coextrusionsfolien gemäß Beispielen 3 bis 12
Schicht (3) Folie 1-1; 100 µm (optional; abhängig von der Dicke der erfindungsgemäßen Folie)
Schicht (4) Folie 1-2; 400 µm
Schicht (5) Folie 1-1; 100 µm (optional; abhängig von der Dicke der erfindungsgemäßen Folie)
Schicht (6) Coextrusionsfolien gemäß Beispielen 3 bis 12
Schicht (7) Folie 2; 50 µm

In obigem Versuchsaufbau wurden die Schichten (3) und (5) eingesetzt, wenn für die Schichten (2) und (6) Coextrusionsfolien mit jeweiligen Schichtdicken von 100 µm verwendet wurden, um eine vergleichbare Gesamtschichtdicke der laminierten Karte zu gewährleisten (vgl. ISO IEC 7810:2003). Es wurde ein symmetrischer Schichtaufbau der Karte gewählt, um ein Verbiegen der Karte zu vermeiden.

Dazu wurde aus den Folien jeweils ein Stapel in der oben genannten Reihenfolge gebildet und die Lamination wurde auf einer Laminationspresse der Firma Bürkle mit folgenden Parametern durchgeführt:
- Vorheizen der Presse auf 170-180°C
- Pressen für 8 Minuten bei einem Druck von 15 N/cm²
- Pressen für 2 Minuten bei einem Druck von 200 N/cm²
- Abkühlen der Presse auf38°C und öffnen der Presse.

### Beispiel 22: Lasergravierung der laserbeschreibbaren Identifikationsdokumente

Auf den ID-Karten aus Beispiel 21 wurde eine Lasergravierung auf einer Laser-Anlage der Firma Foba mit folgenden Parametern durchgeführt:

| | |
|---|---|
| Laser Medium: | Nd:YAG |
| Wellennläge: | 1064 nm |
| Leistung: | 40 Watt |
| Strom: | 30 A |
| Pulsfrequenz: | 14 KHz. |
| Vorschubgeschwindigkeit: | 200 mm/sek. |

Bei der Lasergravierung wurde die Information nur auf eine der laserbeschreibbaren Folienschichten (Schicht (2)) der ID-Karte geschrieben. Als Information wurde das vollständige schwarz-weiß Portrait einer Frau und ein Graustufenkeil mittels Lasergravierung in die laserbeschreibbare Schicht geschrieben.

### Beispiel 23: Bestimmung des Kontrastes

### Bestimmung des Grauwertverlaufs am Graukeil

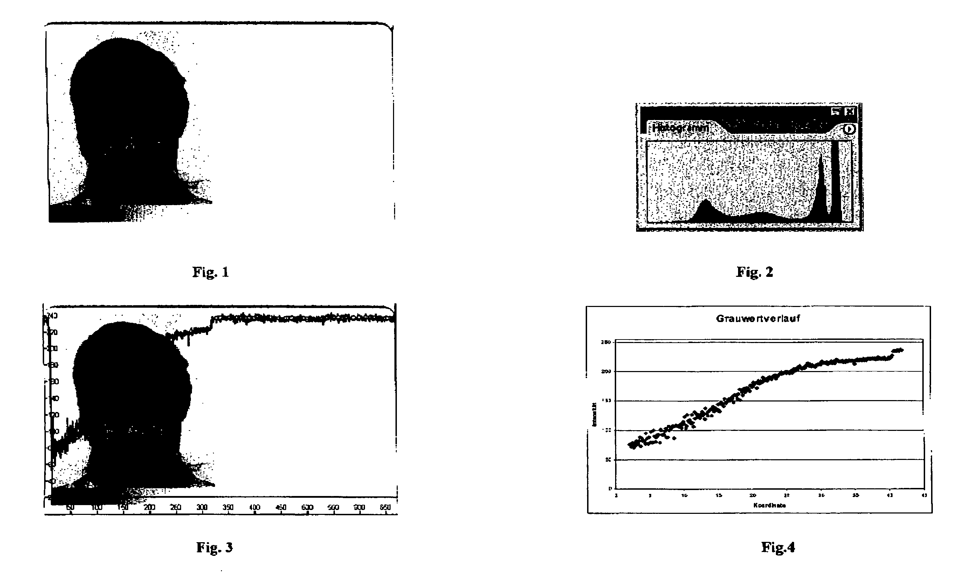

Zur Bestimmung des Grauwertverlaufs eines Graukeils wurde die laserbeschriftete ID-Karte mittels eines Flachbettscanner mit einer Auflösung von 200 dpi digitalisiert. Hierbei war im Histogramm (digitalisierte Form der Karte), welches die statische Häufigkeit der Farbwerte in einem Bild angibt, darauf zu achten, dass die hellen Bildbereiche nicht überbelichtet und die dunklen Bildbereiche nicht unterbelichtet wurden. Eine derartige Über- bzw. Unterbelichtung wurde dadurch vermieden, dass im Histogramm keine Kurve eines Maximums unter 0 oder über 255 hinausragt, sondern die Kurven aller Maxima vollständig zwischen 0 und 255 abgebildet waren. Ein Beispiel einer solchen zu digitalisierenden laserbeschrifteten ID-Karte ist in Fig. 1 gezeigt. Ein Beispiel für ein optimal belichtetes Histogramm ist in Fig. 2 gezeigt.

Das entstandene 24bit-Bild (3 Grundfarben (Rot/Grün/Blau) x 8 Bit(256 Abstufungen)) wurde verlustfrei im tiff-Format gespeichert.

Zur Messung des Grauwertverlaufs wurde im Bildanalyseprogramm AnalySIS ein horizontales Intensitätsprofil über den Graukeil hinweg gemessen. Hierbei ergab sich im RGB (Rot/Grün/Blau)-Farbmodell für jeden Farb-Kanal je ein Intesitätsverlauf. Beispielhaft sind diese Intensitätsverläufe für die drei Farbkanäle Rot, Grün und Blau für die beispielhafte ID-Karte in Fig. 1 in Fig. 3 gezeigt. Die Intensität I wurde über (R+G+B)/3 = 1 gemittelt.

Zur Darstellung der Daten als Diagramm des Grauwertverlaufs wurden nur diejenigen Linienpunkte ausgewertet, die im Bereich des Graukeils liegen. Bildpunkte, die vor und nach dem Graukeil sind, werden in der Auswertung nicht berücksichtigt. Ein solches Diagram des Grauwertverlaufs ist beispielhaft in Fig. 4 gezeigt.

Die so ermittelten Daten erlauben es, Proben eines Flachbettscanns zu vergleichen oder Proben mehrerer Flachbettscanns zu vergleichen bei deren Erstellung in der Scannersoftware die gleichen Vorgaben bezüglich Helligkeit und Kontrast eingestellt bleiben.

Für die Daten zu den ID-Karten gemäß Beispiel 21 wurde der Kontrast des mittels Lasergravur eingravierten Bildes bestimmt. Dieser Kontrast wurde durch das Verhältnis, d.h. den Quotienten, aus Intensität des Grauwertes bei der größten Koordinate des Grauwertverlaufs und Intensität des Grauwerts bei der kleinsten Koordinate des Grauwertverlaufs definiert, wobei die Intensität des Grauwerts bei der größten Koordinate des Grauwertverlaufs bei allen Datensätzen 255 betrug. Je höher dieser Wert (Quotient) war, desto besser war der Kontrast.

Die Ergebnisse der Kontrastbestimmung sind in Tab. 1 aufgeführt:

| **Beispiel** | **Intensität** | | **Quotient (weiß : grau)** | **Hinweis** |
|---|---|---|---|---|
| | **x-Koordinate** | **Intensität** | | |
| **Referenz** | 0 | 236 (grau) | 1,1 | Folie ohne Laser-Additiv |
| | 280 | 255 (weiß) | | |
| **Beispiel 3** | 7 | 133 | 1,9 | 18 ppm Russ |
| | 314 | 255 | | |
| **Beispiel 4** | 3 | 104 | 2,5 | 42 ppm Russ |
| | 304 | 255 | | |
| **Beispiel 5** | 2 | 80 | 3,2 | 60 ppm Russ |
| | 307 | 255 | | |
| **Beispiel 6** | 6 | 125 | 2,0 | 18 ppm Russ |
| | 310 | 255 | | |
| **Beispiel 7** | 4 | 104 | 2,5 | 42 ppm Russ |
| | 307 | 255 | | |
| **Beispiel 8** | 1 | 132 | 1,9 | 18 ppm Russ |
| | 305 | 255 | | |
| **Beispiel 9** | 6 | 104 | 2,5 | 42 ppm Russ |
| | 309 | 255 | | |
| **Beispiel 10** | 2 | 134 | 1,9 | 18 ppm Russ |
| | 305 | 255 | | |
| **Beispiel 11** | 2 | 101 | 2,5 | 42 ppm Russ |
| | 306 | 255 | | |
| **Beispiel 12** | 4 | 85 | 3,0 | 60 ppm Russ |
| | 304 | 255 | | |
| **Beispiel 14** | 16 | 128 | 1,914 | 18 ppm Russ |
| | 425 | 245 | | |
| **Beispiel 15** | 25 | 83 | 2,95 | 60 ppm Russ |
| | 425 | 229 | | |
| **Beispiel 16** | 27 | 65 | 3,323 | 100 ppm Russ |
| | 425 | 216 | | |

Bei der genannten Referenzfolie handelte es sich um die vorangehend aufgeführte Folie 2. Die Referenzmessung diente dazu, den Quotienten einer Folie ohne lasersensibles Additiv zu bestimmen, um Einflüsse solcher Folien ohne lasersensibles Additiv auf die Messung auszuschließen.

Die Ergebnisse zeigten, dass der Kontrast des mittels Lasergravur in die die erfindungsgemäßen Schichtaufbauten enthaltenden ID-Karten eingebrachten schwarz-weiß-Porträts deutlich höher war als bei den Vergleichsbeispielen 3, 6, 8, 10 und 14 mit niedrigerem Gehalt an lasersensiblem Additiv. Bei den Vergleichsbeispielen 17 bis 20 mit höherem Gehalt an lasersensiblem Additiv konnte bereits bei visueller Betrachtung der ID-Karten eine wahrnehmbare Graufärbung des Hintergrundes und damit einhergehend eine wahrnehmbare Verdunklung des eingravierten Porträts insgesamt beobachtet werden. Die erfindungsgemäßen Schichtaufbauten lieferten folglich eine verbesserte Schärfe und Auflösung sowie einen optimalen Farbeindruck des eingravierten Porträts. Der ausgewählte Bereich für den Gehalt an lasersensiblem Additiv zeigt somit ein Optimum für Schärfe und Auflösung des eingravierten Porträts in Kombination mit einem optimalen Farbeindruck für den Betrachter. Darüber hinaus wurde bei der Beurteilung der Qualität und Homogenität des eingelaserten Porträts deutlich, dass die Verwendung der erfindungsgemäßen Schichtaufbauten mit einem Russgehalt und einer Schichtdicke jeweils im erfindungsgemäßen Bereich eine agglomeratfreie Verteilung des Rußes in der laserbeschreibbaren Schicht (thermoplastische Kunststoffschicht enthaltend das lasersensible Additiv) erzielt wurde. Es konnten keine Agglomerate gefunden werden, die nach der Laserbeschriftung zu einem dicken schwarzen Punkt, einem sogenannten Verbrenner, im eingelaserten Porträt führten. Die Schichtdicke der Substratschicht oder das Vorhandensein von Füllstoffen in der Substratschicht hatten keinen objektiven Einfluss auf die Qualität des mittels Lasergravur eingravierten Porträts.

## Patentansprüche

1. Schichtaufbau enthaltend
- wenigstens eine Schicht enthaltend wenigstens einen thermoplastischen Kunststoff und
- wenigstens eine Schicht enthaltend wenigstens einen thermoplastischen Kunststoff und wenigstens ein Schwarzpigment als lasersensibles Additiv,
**dadurch gekennzeichnet, dass** die Schicht enthaltend wenigstens einen thermoplastischen Kunststoff frei von lasersensiblen Additiven ist und die Schicht enthaltend wenigstens einen thermoplastischen Kunststoff und wenigstens ein Schwarzpigment als lasersensibles Additiv eine Schichtdicke von 5 bis 30 µm aufweist und das Schwarzpigment in einer Menge von 40 bis 180 ppm in dieser Schicht enthalten ist.

2. Schichtaufbau gemäß Anspruch 1, **dadurch gekennzeichnet, dass** es sich bei dem lasersensiblen Additiv um Ruß handelt.

3. Schichtaufbau gemäß Anspruch 1 oder 2, **dadurch gekennzeichnet, dass** wenigstens eine Schicht enthaltend wenigstens einen thermoplastischen Kunststoff wenigstens ein Weißpigment als Füllstoff enthält.

4. Schichtaufbau gemäß Anspruch 3, **dadurch gekennzeichnet, dass** es sich bei dem Weißpigment um Titandioxid, Zirkoniumdioxid oder Bariumsulfat, bevorzugt Titandioxid handelt.

5. Schichtaufbau gemäß wenigstens einem der Ansprüche 1 bis 4, **dadurch gekennzeichnet, dass** es sich bei dem thermoplastischen Kunststoff in den einzelnen Schichten unabhängig voneinander um wenigstens einen thermoplastischen Kunststoff ausgewählt aus Polymerisaten von ethylenisch ungesättigten Monomeren und/oder Polykondensaten von bifunktionellen reaktiven Verbindungen, bevorzugt um ein oder mehrere Polycarbonat(e) oder Copolycarbonat(e) auf Basis von Diphenolen, Poly- oder Copolyacrylat(e) und Poly- oder Copolymethacrylat(e), Poly- oder Copolymer(e) mit Styrol, Polyurethan(e), sowie Polyolefin(e), Poly- oder Copolykondensat(e) der Terephthalsäure, Poly- oder Copolykondensate der Naphthalindicarbonsäure, Poly- oder Copolykondensat(e) wenigstens einer Cycloalkyldicarbonsäure, Polysulfone oder Mischungen aus diesen, besonders bevorzugt um ein oder mehrere Polycarbonat(e) oder Copolycarbonat(e) auf Basis von Diphenolen oder Blends enthaltend wenigstens ein Polycarbonat oder Copolycarbonat handelt.

6. Schichtaufbau gemäß wenigstens einem der Ansprüche 1 bis 5, **dadurch gekennzeichnet, dass** er eine weitere Schicht enthaltend wenigstens einen thermoplastischen Kunststoff und wenigstens ein lasersensibles Additiv aufweist, welche eine Schichtdicke von 5 bis 30 µm aufweist und das lasersensible Additiv in einer Menge von 40 bis 180 ppm enthält, wobei die Schicht enthaltend wenigstens einen thermoplastischen Kunststoff zwischen den beiden Schichten enthaltend wenigstens einen thermoplastischen Kunststoff und wenigstens ein lasersensibles Additiv angeordnet ist.

7. Schichtaufbau gemäß wenigstens einem der Ansprüche 1 bis 6, **dadurch gekennzeichnet, dass** die Schicht(en) enthaltend wenigstens einen thermoplastischen Kunststoff und wenigstens ein lasersensibles Additiv und die Schicht(en) enthaltend wenigstens einen thermoplastischen Kunststoff mittels Coextrusion hergestellt werden.

8. Schichtaufbau gemäß wenigstens einem der Ansprüche 1 bis 7, **dadurch gekennzeichnet, dass** das lasersensible Additiv in einer Menge von 50 bis 160 ppm in der oder den Schicht(en) enthaltend wenigstens einen thermoplastischen Kunststoff und wenigstens ein lasersensibles Additiv enthalten ist.

9. Sicherheitsdokument, bevorzugt Identifikationsdokument enthaltend wenigstens einen Schichtaufbau gemäß wenigstens einem der Ansprüche 1 bis 8.

10. Coextrusionsfolie enthaltend
- wenigstens eine Schicht enthaltend wenigstens einen thermoplastischen Kunststoff und
- wenigstens eine Schicht enthaltend wenigstens einen thermoplastischen Kunststoff und wenigstens ein Schwarzpigment als lasersensibles Additiv,
**dadurch gekennzeichnet, dass** die Schicht enthaltend wenigstens einen thermoplastischen Kunststoff und wenigstens ein Schwarzpigment als lasersensibles Additiv eine Schichtdicke von 5 bis 30 µm aufweist und das lasersensible Additiv in einer Menge von 40 bis 180 ppm in dieser Schicht enthalten ist.

11. Coextrusionsfolie gemäß Anspruch 10, **dadurch gekennzeichnet, dass** die Folie zwei Schichten enthaltend wenigstens einen thermoplastischen Kunststoff und wenigstens ein lasersensibles Additiv aufweist, welche eine Schichtdicke von 5 bis 30 µm aufweisen und das lasersensible Additiv in einer Menge von 40 bis 180 ppm enthalten, wobei die Schicht enthaltend wenigstens einen thermoplastischen Kunststoff zwischen den beiden Schichten enthaltend wenigstens einen thermoplastischen Kunststoff und wenigstens ein lasersensibles Additiv angeordnet ist.

12. Coextrusionsfolie gemäß Anspruch 10 oder 11, **dadurch gekennzeichnet, dass** die Schicht enthaltend wenigstens einen thermoplastischen Kunststoff wenigstens ein Weißpigment als Füllstoff enthält.

13. Coextrusionsfolie gemäß wenigstens einem der Ansprüche 10 bis 12, **dadurch gekennzeichnet, dass** die Schicht(en) enthaltend wenigstens einen thermoplastischen Kunststoff wenigstens ein Schwarzpigment als lasersensibles Additiv eine Schichtdicke von 8 bis 25 µm aufweist.

## Claims

1. Layer structure comprising
- at least one layer comprising at least one thermoplastic
and
- at least one layer comprising at least one thermoplastic and at least one black pigment as laser-sensitive additive,
**characterized in that** the layer comprising at least one thermoplastic is free from laser-sensitive additives and the thickness of the layer comprising at least one thermoplastic and at least one black pigment as laser-sensitive additive is from 5 to 30 µm and the amount present of the black pigment in the said layer is from 40 to 180 ppm.

2. Layer structure according to Claim 1, **characterized in that** the laser-sensitive additive involves carbon black.

3. Layer structure according to Claim 1 or 2, **characterized in that** at least one layer comprising at least one thermoplastic comprises at least one white pigment as filler.

4. Layer structure according to Claim 3, **characterized in that** the white pigment involves titanium dioxide, zirconium dioxide or barium sulphate, preferably titanium dioxide.

5. Layer structure according to at least one of Claims 1 to 4, **characterized in that** the thermoplastic in the individual layers independently of one another involves at least one thermoplastic selected from polymers of ethylenically unsaturated monomers and/or from polycondensates of bifunctional reactive compounds, preferably involves one or more polycarbonate(s) or copolycarbonate(s) based on diphenols, involves poly- or copolyacrylate(s) and poly- or copolymethacrylate(s), poly- or copolymer(s) with styrene, involves polyurethane(s), or else polyolefin(s), poly- or copolycondensate(s) of terephthalic acid, involves poly- or copolycondensates of naphthalenedicarboxylic acid, involves poly- or copolycondensate(s) of at least one cycloalkyl dicarboxylic acid, involves polysulphones or mixtures of these, particularly preferably involves one or more polycarbonate(s) or copolycarbonate(s) based on diphenols or involves blends comprising at least one polycarbonate or copolycarbonate.

6. Layer structure according to at least one of Claims 1 to 5, **characterized in that** it has a further layer of thickness from 5 to 30 µm which comprises at least one thermoplastic and at least one laser-sensitive additive and which comprises an amount of from 40 to 180 ppm of the laser-sensitive additive, where the arrangement has the layer comprising at least one thermoplastic between the two layers comprising at least one thermoplastic and at least one laser-sensitive additive.

7. Layer structure according to at least one of Claims 1 to 6, **characterized in that** the layer(s) comprising at least one thermoplastic and at least one laser-sensitive additive and the layer(s) comprising at least one thermoplastic are produced by means of coextrusion.

8. Layer structure according to at least one of Claims 1 to 7, **characterized in that** the amount present of the laser-sensitive additive in the layer(s) comprising at least one thermoplastic and at least one laser-sensitive additive is from 50 to 160 ppm.

9. Security document, preferably identification document comprising at least one layer structure according to at least one of Claims 1 to 8.

10. Coextruded foil comprising
- at least one layer comprising at least one thermoplastic
and
- at least one layer comprising at least one thermoplastic and at least one black pigment as laser-sensitive additive,
**characterized in that** the thickness of the layer comprising at least one thermoplastic and at least one black pigment as laser-sensitive additive is from 5 to 30 µm and the amount present of the laser-sensitive additive is from 40 to 180 ppm in the said layer.

11. Coextruded foil according to Claim 10, **characterized in that** the foil has two layers of thickness from 5 to 30 µm which comprise at least one thermoplastic and at least one laser-sensitive additive and which comprise an amount of from 40 to 180 ppm of the laser-sensitive additive, where the arrangement has the layer comprising at least one thermoplastic between the two layers comprising at least one thermoplastic and at least one laser-sensitive additive.

12. Coextruded foil according to Claim 10 or 11, **characterized in that** the layer comprising at least one thermoplastic comprises at least one white pigment as filler.

13. Coextruded foil according to at least one of Claims 10 to 12, **characterized in that** the thickness of the layer(s) comprising at least one thermoplastic and at least one black pigment as laser-sensitive additive is from 8 to 25 µm.

## Revendications

1. Structure stratifiée, contenant :
- au moins une couche contenant au moins un plastique thermoplastique et
- au moins une couche contenant au moins un plastique thermoplastique et au moins un pigment noir en tant qu'additif sensible aux lasers,
**caractérisée en ce que** la couche contenant au moins un plastique thermoplastique est exempte d'additifs sensibles aux lasers et la couche contenant au moins un plastique thermoplastique et au moins un pigment noir en tant qu'additif sensible aux lasers présente une épaisseur de couche de 5 à 30 µm et le pigment noir est contenu dans cette couche en une quantité de 40 à 180 ppm.

2. Structure stratifiée selon la revendication 1, **caractérisée en ce que** l'additif sensible aux lasers est le noir de carbone.

3. Structure stratifiée selon la revendication 1 ou 2, **caractérisée en ce qu'**au moins une couche contenant au moins un plastique thermoplastique contient au moins un pigment blanc en tant que charge.

4. Structure stratifiée selon la revendication 3, **caractérisée en ce que** le pigment blanc est le dioxyde de titane, le dioxyde de zirconium ou le sulfate de baryum, de préférence le dioxyde de titane.

5. Structure stratifiée selon au moins l'une quelconque des revendications 1 à 4, **caractérisée en ce que** le plastique thermoplastique contenu dans les couches individuelles est indépendamment les unes des autres au moins un plastique thermoplastique choisi parmi les polymères de monomères éthyléniquement insaturés et/ou les polycondensats de composés réactifs bifonctionnels, de préférence un ou plusieurs polycarbonates ou copolycarbonates à base de diphénols, poly- ou copolyacrylates et poly- ou copolyméthacrylates, poly- ou copolymères avec du styrène, polyuréthanes, ainsi que polyoléfines, poly- ou copolycondensats de l'acide téréphtalique, poly- ou copolycondensats de l'acide naphtaline-dicarboxylique, poly- ou copolycondensats d'au moins un acide cycloalkyldicarboxylique, polysulfones ou leurs mélanges, de manière particulièrement préférée un ou plusieurs polycarbonates ou copolycarbonates à base de diphénols ou alliages contenant au moins un polycarbonate ou copolycarbonate.

6. Structure stratifiée selon au moins l'une quelconque des revendications 1 à 5, **caractérisée en ce qu'**elle comprend une couche supplémentaire contenant au moins un plastique thermoplastique et au moins un additif sensible aux lasers, qui présente une épaisseur de couche de 5 à 30 µm et contient l'additif sensible aux lasers en une quantité de 40 à 180 ppm, la couche contenant au moins un plastique thermoplastique étant agencée entre les deux couches contenant au moins un plastique thermoplastique et au moins un additif sensible aux lasers.

7. Structure stratifiée selon au moins l'une quelconque des revendications 1 à 6, **caractérisée en ce que** la ou les couches contenant au moins un plastique thermoplastique et au moins un additif sensible aux lasers et la ou les couches contenant au moins un plastique thermoplastique sont fabriquées par coextrusion.

8. Structure stratifiée selon au moins l'une quelconque des revendications 1 à 7, **caractérisée en ce que** l'additif sensible aux lasers est contenu en une quantité de 50 à 160 ppm dans la ou les couches contenant au moins un plastique thermoplastique et au moins un additif sensible aux lasers.

9. Document de sécurité, de préférence document d'identification, contenant au moins une structure stratifiée selon au moins l'une quelconque des revendications 1 à 8.

10. Feuille coextrudée, contenant :
- au moins une couche contenant au moins un plastique thermoplastique et
- au moins une couche contenant au moins un plastique thermoplastique et au moins un pigment noir en tant qu'additif sensible aux lasers,
**caractérisée en ce que** la couche contenant au moins un plastique thermoplastique et au moins un pigment noir en tant qu'additif sensible aux lasers présente une épaisseur de couche de 5 à 30 µm et l'additif sensible aux lasers est contenu dans cette couche en une quantité de 40 à 180 ppm.

11. Feuille coextrudée selon la revendication 10, **caractérisée en ce que** la feuille comprend deux couches contenant au moins un plastique thermoplastique et au moins un additif sensible aux lasers, qui présentent une épaisseur de couche de 5 à 30 µm et contiennent l'additif sensible aux lasers en une quantité de 40 à 180 ppm, la couche contenant au moins un plastique thermoplastique étant agencée entre les deux couches contenant au moins un plastique thermoplastique et au moins un additif sensible aux lasers.

12. Feuille coextrudée selon la revendication 10 ou 11, **caractérisée en ce que** la couche contenant au moins un plastique thermoplastique contient au moins un pigment blanc en tant que charge.

13. Feuille coextrudée selon au moins l'une quelconque des revendications 10 à 12, **caractérisée en ce que** la ou les couches contenant au moins un plastique thermoplastique et au moins un pigment noir en tant qu'additif sensible aux lasers présente(nt) une épaisseur de couche de 8 à 25 µm.
